# EUROPÄISCHE PATENTSCHRIFT

(11) **EP 2 215 382 B1**
(45) Veröffentlichungstag und Bekanntmachung des Hinweises auf die Patenterteilung: **26.10.2011**
(21) Anmeldenummer: 08857627.7
(22) Anmeldetag: 29.11.2008
(51) Int. Cl.: F16H 47/04

(54) **LEISTUNGSVERZWEIGUNGSGETRIEBE**
TORQUE-SPLITTING TRANSMISSION
TRANSMISSION A DERIVATION DE PUISSANCE

(30) Priorität: 07.12.2007 DE 102007059321
(43) Veröffentlichungstag der Anmeldung: 11.08.2010
(73) Patentinhaber: Hytrac GmbH, 45139 Essen (DE)
(72) Erfinder: TOLKSDORF, Detlef, 45141 Essen (DE); TRAUTMANN, Nils, 45739 Oer-Erkenschwick (DE)
(74) Vertreter: Döpp, Ludger
(86) Internationale Anmeldenummer: PCT/DE2008/002001
(87) Internationale Veröffentlichungsnummer: WO 2009/071060

(56) Entgegenhaltungen:
- WO-A-2006/027983
- WO-A-2006/042434
- WO-A-2006/126368
- DE-A1- 3 733 152
- DE-A1- 4 343 401

## Beschreibung

Die Erfindung betrifft ein hydrostatisch mechanisches Leistungsverzweigungsgetriebe gemäß gattungsbildendem Teil des ersten Patentanspruchs.

Ein hydrostatisch mechanisches Leistungsverzweigungsgetriebe wird beispielsweise in der DE 10 2004 001 929 A1 beschrieben. Vorgeschlagen wird ein Leistungsverzweigungsgetriebe mit stufenlos veränderlichem Übersetzungsverhältnis, das einen hydrostatischen Getriebeteil, bestehend aus einer ersten Hydrostateinheit mit verstellbarem Volumen und einer zweiten Hydrostateinheit mit konstantem Volumen und einem mechanischen Getriebeteil, umfassend ein Summierungsgetriebe und ein Bereichsgetriebe aufweist, bei dem das Summierungsgetriebe und das Bereichsgetriebe achsversetzt zu den Hydrostateinheiten angeordnet sind.

Ein weiteres Leistungsverzweigungsgetriebe ist in der DE 103 13 486 A1 beschrieben, beinhaltend einen hydrostatischen Getriebeteil und einen mechanischen Getriebeteil, wobei die Leistung der Getriebeteile in einem Summierungsgetriebe zusammengeführt wird, umfassend eine Eingangswelle, eine Abtriebswelle und eine Zwischenwelle, auf der der Motor und die Pumpe des hydrostatischen Getriebeteils angeordnet sind, wobei der Abtrieb des hydrostatischen Getriebeteils mittels eines Zahnrades mit dem Summierungsgetriebe verbunden ist und wobei an der Hydrostatabtriebsseite in Kraftflussrichtung hinter dem Motor eine hydraulisch betätigbare Axialklauenschaltung angeordnet ist, welche das Antriebszahnrad mit dem Abtrieb des Hydrostaten mittels einer Axialklaue lösbar verbindet.

Durch die DE 44 04 829 C2 ist ein hydrostatisches mechanisches Lastschaltgetriebe, insbesondere für mobile Bau- und Arbeitsmaschinen, bekannt geworden, das mindestens zwei über mindestens eine Pumpe antreibbare, eingangswellenseitig mit mindestens einer Zahnradpaarung in Wirkverbindung stehende Hydromotore aufweist, die für einen ersten Fahrbereich der Bau- und Arbeitsmaschine zur Addition der Drehmomente beider Hydromotore über eine Kupplung miteinander verbunden sind, und mindestens ein, mindestens eine Abtriebswelle des Lastschaltgetriebes beinhaltendes Planetengetriebe aufweist, dessen Hohlrad über mindestens eine Bremse festsetzbar ist, wobei für einen sich an den ersten Fahrbereich anschließenden weiteren Fahrbereich zumindest einer der Hydromotore über die Kupplung der Antriebswelle des anderen Hydromotors entkuppelbar ist. Der von der Antriebswelle entkuppelbare Hydromotor ist über eine weitere Kupplung im Bereich seiner Antriebswelle zur mechanischen Addition der Drehzahlen beider Hydromotore entsprechend dem Überlagerungsprinzip kraftschlüssig auf das Hohlrad des Planetengetriebes kuppelbar.

Die gattungsgemäße DE 37 33 152 A1 offenbart eine Antriebseinrichtung eines Schwerfahrzeugs, insbesondere Schwerlastnutzfahrzeugs oder Kettenfahrzeuges, mit einem hydromechanischen Leistungsverzweigungsgetriebe zwischen Antriebsmotor und Achsantriebsstrang, mit einem Planetendifferentialgetriebe, mit mindestens zwei Reihen von Planetenrädern, zwei Sonnenrädern, einem Steg und einem Hohlrad, ferner mit einer Getriebeeingangswelle und einer Getriebeausgangswelle, angeschlossen an verschiedene Wellen des Planetendifferentialgetriebes und mit mindestens zwei Hydrowandiern, die jeweils in mindestens einem Betriebsbereich an einer eigenen Welle des Planetendifferentialgetriebes angeschlossen sind, wobei mindestens einer der Hydrowandler von einer Welle zum anderen beim Übergang von einen in den anderen Betriebsbereich über schaltbare Kupplungen, während der andere Hydrowandler zumindest annähernd still steht, umschaltbar ist. Dem Leistungsverzweigungsgetriebe ist ein zusätzlicher verstellbarer Hydrowandler zugeordnet, der in zwei verschiedenen Betriebsbereichen des Fahrzeuges unterschiedlich zum Einsatz kommt.

Ziel des Erfindungsgegenstandes ist es, ein alternatives hydrostatisch mechanisches Leistungsverzweigungsgetriebe bereit zu stellen, das einfach im Aufbau ist und verschiedene Schaltzustände zulässt.

Dieses Ziel wird dadurch erreicht, dass ein hydrostatisch mechanisches Leitungsverzweigungsgetriebe, beinhaltend ein Gehäuse, respektive ein aus einzelnen Gehäuseteilen zusammengesetztes Gehäuse, mindestens eine innerhalb des Gehäuses angeordnete von mindestens einem Antriebsmotor, insbesondere einer Brennkraftmaschine, antreibbare Antriebswelle, die über Zahnradelemente, nach Art eines Pumpenverteilergetriebes, auf mindestens eine Hydropumpe einwirkt und über mindestens ein weiteres Zahnrad verfügt, das mittel- oder unmittelbar auf ein Abtriebselement eines Lastschaltgetriebes einwirkt, wobei zumindest im Bereich des Zahnrades mindestens ein Kupplungselement positioniert ist, wobei das Lastschaltgetriebe zumindest über mindestens eine, im hydrostatischen Kreislauf antreibbare Welle verfügt, im Bereich derer Kupplungen, Bremsen, Bauteile eines einstufigen Planetengetriebes und dergleichen Bauteile vorgesehen sind, wobei das Abtriebselement des Lastschaltgetriebes auf mindestens eine Ausgangswelle geschaltet ist, und wobei die im Bereich des Leistungsverzweigungsgetriebes, respektive des Lastschaltgetriebes, vorgesehenen Kupplungen, so betätigt werden, dass das Getriebe wahlweise
- leistungsverzweigt hydraulisch und mechanisch oder
- rein mechanisch
   betrieben werden kann, **dadurch gekennzeichnet, dass** das Getriebe wahlweise auch hydraulisch betrieben werden kann, und dass auf der Antriebswelle mindestens zwei Zahnräder vorgesehen sind, die zur Realisierung unterschiedlicher Betriebszustände auf das Abtriebselement kuppelbar sind, dergestalt, dass zur Bildung von Zahnradstufen das jeweilige Zahnrad mit einem weiteren Zahnrad kämmt, das wiederum über einen weiteren Zahnradkörper auf das Abtriebselement einwirkt.

Vorteilhafte Weiterbildungen des Erfindungsgegenstandes sind den zugehörigen Unteransprüchen zu entnehmen.

Bisher zum Einsatz gelangende Getriebekonzepte, insbesondere im Einsatz in Mobilfahrzeugen, wie Baumaschinen oder dergleichen, beinhalten ein Lastschaltgetriebe und ein separates Pumpenverteilergetriebe, so dass ein größerer Bauraum benötigt wird. Durch das erfindungsgemäße Konzept wird, einem weiterem Gedanken der Erfindung gemäß, innerhalb eines einzigen Gehäuses die Technologie eines Pumpenverteilergetriebes mit der Technologie eines Lastschaltgefriebes verknüpft, wobei es von besonderem Vorteil ist, dass die vorab stehenden Betriebszustände auf einfache Art realisiert werden können.

Der Erfindungsgegenstand ist anhand eines Ausführungsbeispiels in der Zeichnung dargestellt und wird wie folgt beschrieben. Es zeigen:

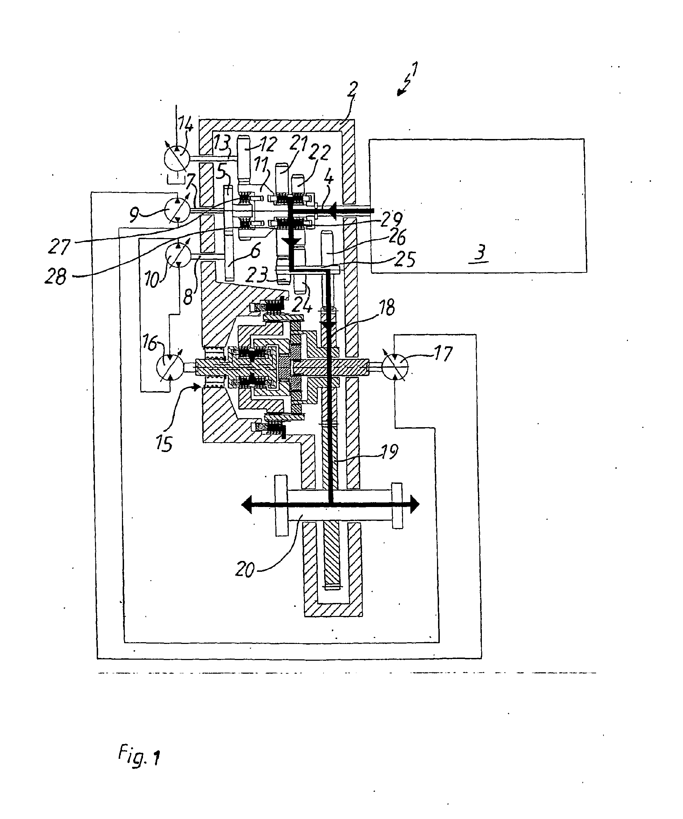

Figuren 1 bis 3 Prinzipskizzen unterschiedlicher Betriebszustände des erfindungsgemäßen hydrostatisch mechanischen Lastschaltgetriebes.

Die Figuren 1 bis 3 zeigen Prinzipskizzen unterschiedlicher Betriebszustände des erfindungsgemäßen Leistungsverzweigungsgetriebes 1. Das Leistungsverzweigungsgetriebe 1 beinhaltet ein aus Gussmaterial bestehendes Gehäuse 2, das eine mittels eines Dieselmotors 3 antreibbare Antriebswelle 4 aufweist. Auf der Antriebswelle 4 ist ein Zahnradelement 5 unmittelbar befestigt, das mit einem weiteren Zahnradelement 6 kämmt. Über Wellen 7,8 wirken die Zahnradelemente 5,6 jeweils auf eine Hydropumpe 9,10 ein. Axial vor dem Zahnradelement 5 befindet sich ein Hohlrad 11, das mit einem weiteren Zahnradelement 12 kämmt, welches über eine Welle 13 mit einer weiteren Hydropumpe 14 verbunden ist. Die Zahnradelemente 5,6,12 sind üblicherweise innerhalb eines herkömmlichen Pumpenverteilergetriebes angeordnet und wirken, angetrieben durch die Antriebswelle 4, auf die Hydropumpen 9,10,14 ein. Der Erfindungsgegenstand macht sich dieses Grundprinzip zu nutze und erweitert es dahingehend, dass innerhalb des gleichen Gehäuses 2 auch ein Lastschaltgetriebe 15 angeordnet ist. Derartige Lastschaltgetriebe sind beispielsweise in der DE 44 04 829 C2 beschrieben, so dass der konstruktive Aufbau hier nicht im Detail abgehandelt wird, vielmehr, was die einzelnen Bauteile angeht, auf diese Druckschrift verwiesen wird. In Analogie zu dieser Druckschrift können auch hier in einem ersten Fahrbereich, beispielsweise einer Baumaschine, Drehmomente und in einem weiteren Fahrbereich Drehzahlen addiert werden. Die Hydropumpen 9,10 wirken im geschlossenen Kreislauf mit im Bereich des Lastschaltgetriebes 15 vorgesehenen Hydromotoren 16,17 zusammen. Das Lastschaltgetriebe 15 verfügt ausgangsseitig über ein Abtriebselement 18, das über ein Zahnrad 19 mit einer Ausgangswelle 20 in Wirkverbindung steht. Das erfindungsgemäße Leistungsverzweigungsgetriebe 1 kann beispielsweise in einen Radlader eingebaut werden. Zur Realisierung unterschiedlicher Schaltzustände des Leistungsverzweigungsgetriebes 1 sind auf der Antriebswelle 4 in diesem Beispiel zwei Zahnräder 21,22 unterschiedlichen Durchmessers angeordnet, die mit ebenfalls unterschiedliche Durchmesser aufweisenden weiteren Zahnrädern 23,24 kämmen. Über einen Wellenabschnitt 25 stehen die Zahnräder 23,24 mit einem weiteren Zahnrad 26 in Wirkverbindung, das wiederum mit dem Abtriebselement 18 kämmt.

Sowohl das Hohlrad 11 als auch die Zahnräder 21,22 sind mit Kupplungselementen 27,28,29 ausgerüstet.

In Figur 1 ist ein definierter Leistungsfluss (Pfeil) erkennbar, bei welchem der Dieselmotor 3 über die Antriebswelle 4, die Zahnradstufe 21,23 bzw. 22,24, den Wellenabschnitt 25, das Zahnrad 26, das Abtriebselement 18, das Zahnrad 19 die Ausgangswelle 20 antreibt. Hier ist ein rein mechanischer Leistungsfluss gegeben, ohne dass die Hydropumpen 9,10 aktiv sind. Dies gilt nicht für die Hydropumpe 14, die bedarfsweise eine Arbeitspumpe sein kann und daher immer im Betrieb sein muss. Dies bedeutet, dass die Kupplung 27 geöffnet ist und den Hydropumpen 9,10 keine Leistung zur Verfügung gestellt wird. Die Hydropumpe 14 wird über das Hohlrad 11, das Zahnrad 12 sowie die Welle 13 angetrieben.

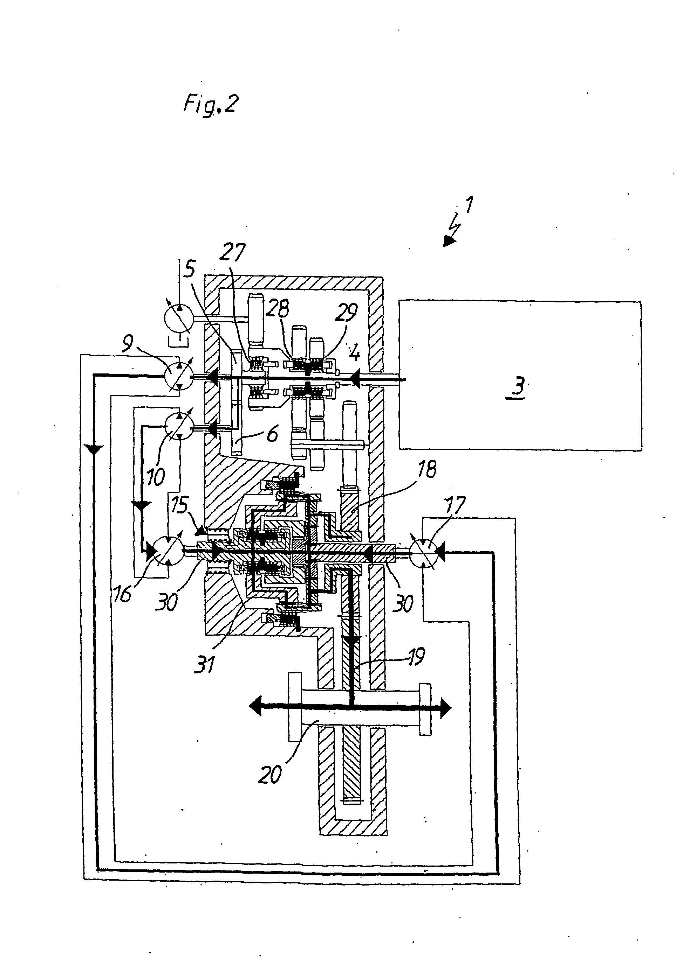

Figur 2 zeigt einen anderen Betriebszustand. Auch hier ist der Leistungsfluss (Pfeil) dargestellt. Der Dieselmotor 3 treibt die Antriebswelle 4 an, wobei die Kupplungen 28,29 geöffnet sind und somit keine unmittelbare Kraftübertragung auf das Abtriebselement 18 erfolgen kann. Die Kupplung 27 ist geschlossen, so dass über die Zahnradelemente 5,6 die Hydropumpen 9,10 angetrieben werden. Im geschlossen hydrostatischen Kreislauf werden über die Hydropumpen 9,10 nun auch die Hydromotore 16,17 mit Druck beaufschlagt, so dass über das gemeinsame Antriebselement 30 das Planetengetriebe 31 des Lastschaltgetriebes 15 aktiviert wird. Über das Abtriebselement 18 wird das Zahnrad 19 und somit die Ausgangswelle 20 angetrieben. Dieser Schaltzustand ist ein rein hydraulischer Betriebszustand.

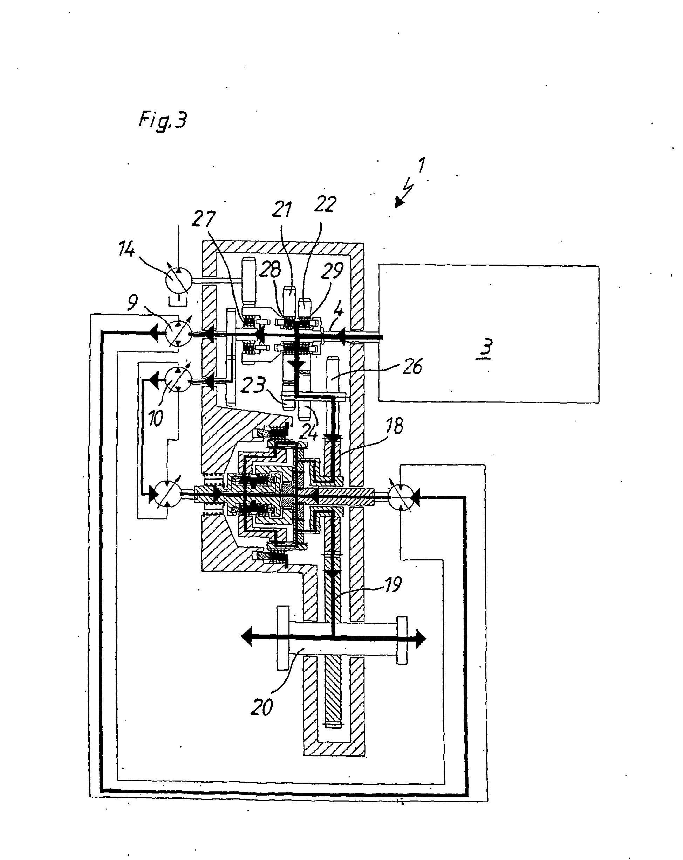

Figur 3 zeigt nun die leistungsverzweigte hydraulische und mechanische Betriebsweise des erfindungsgemäßen Leistungsverzweigungsgetriebes 1 (Pfeil). Je nach Schaltzustand ist entweder die Kupplung 28 oder die Kupplung 29 geschlossen, so dass entweder über die Zahnradstufe 21,23 oder die Zahnradstufe 22,24 den Wellenabschnitt 25, das Zahnrad 28 auf das Abtriebselement 18 eingewirkt werden kann. Gleichzeitig ist die Kupplung 27 geschlossen, so dass der Dieselmotor 3 über die Antriebswelle 4 auch die Hydropumpen 9,10 antreibt. Das weitere Schaltprinzip ist in Figur 2 bereits angesprochen worden. Die gemeinsame Leistung wird über das Abtriebselement 18 auf die mit dem Zahnrad 19 ausgerüstete Ausgangswelle 20 aufgeschaltet. In Analogie zu den Figuren 1 und 2 ist auch hier die Hydropumpe 14 stets angetrieben.

### Bezugszeichenliste

- 1: Leistungsverzweigungsgetriebe
- 2: Gehäuse
- 3: Dieselmotor
- 4: Antriebswelle
- 5: Zahnradelement
- 6: Zahnradelement
- 7: Welle
- 8: Welle
- 9: Hydropumpe
- 10: Hydropumpe
- 11: Hohlrad
- 12: Zahnradelement
- 13: Welle
- 14: Hydropumpe
- 15: Lastschaltgetriebe
- 16: Hydromotor
- 17: Hydromotor
- 18: Abtriebselement
- 19: Zahnrad
- 20: Ausgangswelle
- 21: Zahnrad
- 22: Zahnrad
- 23: Zahnrad
- 24: Zahnrad
- 21/23: Zahnradstufe
- 22/24: Zahnradstufe
- 25: Wellenabschnitt
- 26: Zahnrad
- 27: Kupplung
- 28: Zahnrad
- 29: Kupplung
- 30: Antriebselement
- 31: Planetengetriebe

## Patentansprüche

1. Hydrostatisch mechanisches Leitungsverzweigungsgetriebe, beinhaltend ein Gehäuse, respektive ein aus einzelnen Gehäuseteilen zusammengesetztes Gehäuse, mindestens eine innerhalb des Gehäuses angeordnete von mindestens einem Antriebsmotor, insbesondere einer Brennkraftmaschine, antreibbare Antriebswelle (4), die über Zahnradelemente (5,6,12), nach Art eines Pumpenverteilergetriebes, auf mindestens eine Hydropumpe (9,10,14) einwirkt und über mindestens ein weiteres Zahnrad (21,23,22,24,26) verfügt, das mittel- oder unmittelbar auf ein Abtriebselement (18) eines Lastschaltgetriebes (15) einwirkt, wobei zumindest im Bereich des Zahnrades (21,22) mindestens ein Kupplungselement (28,29) positioniert ist, wobei das Lastschaltgetriebe (15) zumindest über mindestens eine, im hydrostatischen Kreislauf antreibbare Welle verfügt, im Bereich derer Kupplungen, Bremsen, Bauteile eines einstufigen Planetengetriebes und dergleichen Bauteile vorgesehen sind, wobei das Abtriebselement (18) des Lastschaltgetriebes (15) auf mindestens eine Ausgangswelle (20) geschaltet ist, und wobei die im Bereich des Leistungsverzweigungsgetriebes, respektive des Lastschaltgetriebes (15), vorgesehenen Kupplungen, so betätigt werden, dass das Getriebe wahlweise
- leistungsverzweigt hydraulisch und mechanisch oder
- rein mechanisch
betrieben werden kann, **dadurch gekennzeichnet, dass** das Getriebe wahlweise auch neim hydraulisch betrieben werden kann, und dass auf der Antriebswelle (4) mindestens zwei Zahnräder (21,23;22,24) vorgesehen sind, die zur Realisierung unterschiedlicher Betriebszustände auf das Abtriebselement (18) kuppelbar sind, dergestalt, dass zur Bildung von Zahnradstufen das jeweilige Zahnrad (21,23) mit einem weiteren Zahnrad (22,24) kämmt, das wiederum über einen weiteren Zahnradkörper (26) auf das Abtriebselement (18) einwirkt.

2. Leistungsverzweigungsgetriebe nach Anspruch 1, **dadurch gekennzeichnet, dass** die Antriebswelle (4) mittel- oder unmittelbar auf mindestens drei Zahnradelemente (5,6,12) einwirkt, dergestalt, dass drei Hydropumpen (9,10,14) antreibbar sind.

3. Leistungsverzweigungsgetriebe nach Anspruch 1 oder 2, **dadurch gekennzeichnet, dass** auf der Antriebswelle (4) ein Hohlrad (11) positioniert ist, das mit einem der Zahnradelemente (12) in Wirkverbindung steht.

4. Leistungsverzweigungsgetriebe nach einem der Ansprüche 1 bis 3, **dadurch gekennzeichnet, dass** das Hohlrad (11) ein weiteres Kupplungselement (27) aufnimmt.

5. Leistungsverzweigungsgetriebe nach einem der Ansprüche 1 bis 4, **dadurch gekennzeichnet, dass** die Kupplungen 27-29) durch Lamellenkupplungen gebildet sind.

6. Leistungsverzweigungsgetriebe nach einem der Ansprüche 1 bis 5, **dadurch gekennzeichnet, dass** die Bauteile des Pumpenverteilergetriebes, die mechanische Überbrückung und die Bauteile des Lastschaltgetriebes innerhalb eines gemeinsamen Gehäuses vorgesehen sind.

## Claims

1. A hydrostatic mechanical torque-splitting transmission comprising a housing or a housing composed of individual housing elements, at least one drive shaft (4) that is disposed inside the housing and that can be driven by at least one driving motor, in particular an internal combustion engine, said drive shaft (4) acting on at least one hydraulic pump (9, 10, 14) by means of gear elements (5, 6, 12) in the manner of a pump transfer case and comprising at least one further gear wheel (21, 23, 22, 24, 26) which directly or indirectly acts on an output element (18) of a power-shift transmission (15), wherein at least one clutch element (28, 29) is positioned in at least the region of the gear wheel (21, 22) and wherein the power-shift transmission (15) has at least one shaft that can be driven in the hydrostatic circuit, clutches, brakes, components of a single-stage planet gear and like components being provided in the region of said shaft, wherein the output element (18) of the power-shift transmission (15) is shifted to at least one output shaft (20), and wherein the clutches provided in the region of the torque-splitting transmission or the power-shift transmission (15) are actuated such that the transmission can be operated optionally
- hydraulically and mechanically in a torque-splitting manner or
- in a purely mechanical manner,
**characterized in that** the transmission can be alternatively also operated in a purely hydraulic manner, and that at least two gear wheels (21, 23; 22, 24) are provided on the drive shaft (4), which gear wheels can be coupled on the output element (18) for realizing different operating states, such that for forming gear stages the respective gear wheel (21, 23) meshes with another gear wheel (22, 24) which in turn acts on the output element (18) by means of a further gear body (26).

2. A torque-splitting transmission according to claim 1, **characterized in that** the drive shaft (4) indirectly or directly acts upon at least three gear elements (5, 6, 12), such that three hydraulic pumps (9, 10, 14) can be driven.

3. A torque-splitting transmission according to claim 1 or 2, **characterized in that** a gear ring (11) is positioned on the drive shaft (4), which gear ring is actively related to one of the gear elements (12).

4. A torque-splitting transmission according to one of the claims 1 through 3, **characterized in that** the gear ring (11) receives another clutch element (27).

5. A torque-splitting transmission according to one of the claims 1 through 4, **characterized in that** the clutches (27-29) are formed by multi-disk clutches.

6. A torque-splitting transmission according to one of the claims 1 through 5, **characterized in that** the components of the pump transfer case, the mechanical bridge and the components of the power-shift transmission are provided inside a common housing.

## Revendications

1. Engrenage avec branchement de couple hydrostatique et mécanique, comprenant un boîtier respectivement un boîtier composé d'éléments de boîtier individuels, au moins un arbre menant (4) disposé à l'intérieur du boîtier et actionnable par au moins un moteur de commande, notamment un moteur à combustion interne, l'arbre menant agissant sur au moins une pompe hydraulique (9, 10, 14) par des éléments de roue dentée à la manière d'un engrange distributeur à pompes et ayant au moins une autre roue dentée (21, 23, 22, 24, 26) qui agit indirectement ou directement sur un élément récepteur (18) d'une boîte de vitesse et d'inversion (15), au moins un élément d'embrayage (28, 29) étant positionné au niveau de la roue dentée (21, 22), la boîte de vitesse et d'inversion (15) ayant au moins un arbre actionnable dans le circuit hydrostatique, au niveau duquel des embrayages, des freins, des composants d'un engrange planétaire à simple effet et des composants similaires sont prévus, l'élément récepteur (18) de la boîte de vitesse et d'inversion (15) étant relié à au moins un arbre de sortie (20), et des embrayages prévus au niveau de l'engrenage avec branchement de couple respectivement au niveau de la boîte de vitesse et d'inversion (15) étant actionnés de sorte que l'engrenage peut être facultativement opéré
- de manière hydraulique et mécanique avec branchement de couple
- de manière purement mécanique,
**caractérisé en ce que** l'engrenage peut aussi être facultativement opéré de manière purement hydraulique, et qu'au moins deux roues dentées (21, 23 ; 22, 24) sont prévues sur l'arbre menant (4), qui sont susceptibles d'être couplées sur l'élément récepteur (18) pour réaliser des états de marche différents, de sorte que pour former des étapes d'engrenages la roue dentée respective (21, 23) s'engrène dans une autre roue dentée (22, 24) qui à son tour agit sur l'élément de récepteur (18) par l'intermédiaire d' un autre corps d'engrenages (26).

2. Engrenage avec branchement de couple selon la revendication 1, **caractérisé en ce que** l'arbre menant (4) agit indirectement ou directement sur au moins trois éléments de roue dentée (5, 6, 12), de sorte que trois pompes hydrauliques (9, 10, 14) sont actionnables.

3. Engrenage avec branchement de couple selon la revendication 1 ou la revendication 2, **caractérisé en ce qu'**une roue à denture intérieure (11) est positionnée sur l'arbre menant (4), laquelle est en relation active avec l'un des éléments de roue dentée (12).

4. Engrenage avec branchement de couple selon l'une des revendications 1 à 4, **caractérisé en ce que** la roue à denture intérieure (11) reçoit un autre élément d'embrayage (27).

5. Engrenage avec branchement de couple selon l'une des revendications 1 à 4, **caractérisé en ce que** les embrayages (27-29) sont formés par des embrayages à disques.

6. Engrenage avec branchement de couple selon l'une des revendications 1 à 5, **caractérisé en ce que** les composants de l'engrenage distributeur à pompes, le pontage mécanique et les composants de la boîte de vitesse et d'inversion sont prévus à l'intérieur d'un boîtier commun.
